# EUROPEAN PATENT APPLICATION

(11) **EP 3 903 990 A1**
(43) Date of publication of application: **03.11.2021**
(21) Application number: 19932818.8
(22) Date of filing: 13.12.2019
(51) Int. Cl.: B23K 26/34, B23K 26/04, B23K 26/21, B29C 64/153, B29C 64/209, B29C 64/393, B33Y 10/00, B33Y 30/00, B33Y 50/02

(54) **THREE-DIMENSIONAL LAYERING DEVICE AND METHOD**

(30) Priority: 11.06.2019 JP 2019108960
(71) Applicant: Mitsubishi Heavy Industries Machine Tool Co., Ltd., Ritto-shi, Shiga 520-3080 (JP); Technology Research Association For Future Additive Manufacturing, Tokyo, 101-0044 (JP)
(72) Inventor: WAKANA, Tomohiro, Ritto-shi, Shiga 520-3080 (JP)
(74) Representative: Studio Torta S.p.A.
(86) International application number: PCT/JP2019/048862
(87) International publication number: WO 2020/250463

(57) **Abstract**

A three-dimensional deposition device and a three-dimensional deposition device method are provided. Included are: a powder passage (43) and a nozzle injection opening (45) that supply a powder (P) toward a working surface (91) of an object (90) to be processed; a laser path (44) that irradiates the powder (P) with a laser beam (L) to sinter or melt and solidify at least a part of the powder (P) irradiated with the laser beam (L) so as to form formed layers (151, 152, 153, and 154); a rotation table unit (17) serving as an irradiation angle changing unit that changes an irradiation angle (θ) of the laser beam (L) emitted from the laser path (44) to the working surface (91); and a controller (52) that controls the rotation table unit (17) so that the irradiation angle (θ) on an overhanging side with respect to the working surface (91) is less than 90° in a range in which the formed layers (151, 152, 153, and 154) can be formed.

## Description

### Field

The present disclosure relates to a three-dimensional deposition device and a method used to manufacture a three-dimensional object by deposition.

### Background

As a technology of manufacturing a three-dimensional object, there is known a deposition shaping technology of manufacturing a three-dimensional object by irradiating a metallic powder material with a light beam. As the deposition shaping technology, for example, there is one disclosed in Patent Literature 1. The technology disclosed in Patent Literature 1 is a technology of forming a sintered layer by irradiating a powder layer formed of a metallic powder material with a light beam and manufacturing a three-dimensional object, in which a plurality of sintered layers are integrally deposited, by repeating this process.

### Citation List

### Patent Literature

Patent Literature 1: Japanese Patent Application Laid-open No. 2015-196264

### Summary

### Technical Problem

There is a desire to manufacture a three-dimensional object that is inclined to be displaced in a horizontal direction with respect to a working surface of an object to be processed, that is, overhangs on one side by the deposition shaping technology. In the deposition shaping technology, a light beam is emitted to the working surface of the object to be processed and a metallic powder material is injected to a focal position of the light beam. By so doing, the metallic powder material is melted and solidified on the working surface of the object to be processed, so that a formed layer is formed. At this time, it is necessary not only to melt the metallic powder material by the energy of the light beam, but also to melt the working surface of the object to be processed, so that the light beam is emitted orthogonally to the working surface of the object to be processed. Therefore, when an overhanging three-dimensional object is manufactured on the working surface of the object to be processed, the light beam is emitted to the working surface so as to be orthogonal thereto to form a formed layer in which the metallic powder material is melted, and the formed layer is deposited while being displayed in the horizontal direction. Then, in order to deposit an upper formed layer on a lower formed layer, when a working surface of the lower formed layer is irradiated with the light beam, a melted part at an end on an overhanging side may melt down, which makes it difficult to manufacture a three-dimensional object having a desired overhang shape.

The present disclosure has been made to solve the problems described above and an object of the present disclosure is to provide a three-dimensional deposition device and a method for improving the quality of a three-dimensional object having an overhang shape.

### Solution to Problem

To achieve the objective described above, a three-dimensional deposition device of the present disclosure has an overhang shape by depositing a formed layer on an object to be processed, the three-dimensional deposition device comprising: a powder supply unit that supplies a powder material toward a working surface of the object to be processed; a light irradiation unit that irradiates the powder material with a light beam to sinter or melt and solidify at least a part of the powder material irradiated with the light beam so as to form the formed layer; an irradiation angle changing unit that changes an irradiation angle of the light beam emitted from the light irradiation unit to the working surface; and a controller that controls the irradiation angle changing unit so that the irradiation angle on an overhanging side with respect to the working surface is less than 90° in a range in which the formed layer is formable.

Therefore, when the three-dimensional object having an overhang shape is formed by forming the formed layer on the working surface of the object to be processed, the irradiation angle of the light beam on the overhanging side with respect to the working surface is set to be less than 90°. At this time, the surface of a lower formed layer is irradiated with the light beam and the powder material is supplied. By so doing, since the lower formed layer is irradiated with the light beam along the overhang shape, a melted part is properly formed on the surface of the lower formed layer, so that an upper formed layer can be properly deposited on the lower formed layer. As a consequence, it is possible to improve the quality of the three-dimensional object having an overhang shape.

In the three-dimensional deposition device of the present disclosure, the controller controls the irradiation angle changing unit so that the irradiation angle on the overhanging side with respect to the working surface is gradually reduced when the formed layer is deposited on a surface of the formed layer.

Therefore, when the formed layer is deposited on the surface of the formed layer, the irradiation angle of the light beam is gradually reduced, so that a plurality of formed layers deposited on the working surface can be efficiently formed in an overhang shape.

In the three-dimensional deposition device of the present disclosure, the controller controls the irradiation angle changing unit so that the irradiation angle with respect to the surface of the formed layer is 90°.

Therefore, the irradiation angle with respect to the surface of the formed layer is set to 90°, so that it is possible to properly deposit a next formed layer on the surface of the formed layer, thereby improving the quality of the three-dimensional object having an overhang shape.

In the three-dimensional deposition device of the present disclosure, the controller controls the powder supply unit and the light irradiation unit so that a thickness of the formed layer on the overhanging side is thinner than a thickness of the formed layer on a non-overhanging side.

Therefore, the thickness of the formed layer on the overhanging side is set to be thinner than that of the formed layer on a non-overhanging side, so that a plurality of formed layers can be efficiently formed in an overhang shape.

In the three-dimensional deposition device of the present disclosure, the light irradiation unit is provided at a center of a deposition head, the powder supply unit is provided around the light irradiation unit in the deposition head, and the irradiation angle changing unit also changes an injection angle at which the powder supply unit performs injection toward the working surface, when changing the irradiation angle.

Therefore, the injection angle of the powder is also changed when the irradiation angle of the light beam is changed, so that it is possible to always maintain the injection position of the powder material at a proper position with respect to the irradiation position of the light beam, thereby improving the quality of the three-dimensional object having an overhang shape.

A three-dimensional deposition method of the present disclosure forms a three-dimensional object having an overhang shape by depositing a formed layer on an object to be processed, the three-dimensional deposition method comprising: a step of supplying a powder material toward a working surface of the object to be processed; a step of irradiating the powder material with a light beam and sintering or melting and solidifying at least a part of the powder material irradiated with the light beam to form the formed layer; and a step of allowing an irradiation angle of the light beam on an overhanging side with respect to the working surface when the formed layer is formed to be less than 90° in a range in which the formed layer is formable.

Therefore, the surface of a lower formed layer is irradiated with the light beam and the powder material is supplied. By so doing, since the lower formed layer is irradiated with the light beam along the overhang shape, a melted part is properly formed on the surface of the lower formed layer, so that an upper formed layer can be properly deposited on the lower formed layer. As a consequence, it is possible to improve the quality of the three-dimensional object having an overhang shape.

In the three-dimensional deposition method of the present disclosure, when the formed layer is deposited on a surface of the formed layer, the irradiation angle on the overhanging side with respect to the working surface is gradually reduced.

Therefore, a plurality of formed layers deposited on the working surface can be efficiently formed in an overhang shape.

In the three-dimensional deposition method of the present disclosure, a front end of the three-dimensional object having an overhang shape is cut at a cutting surface in a direction orthogonal to an overhanging direction, and the irradiation angle of the light beam on the overhanging side with respect to the cutting surface is set to be less than 90° in a range in which the formed layer is formable.

Therefore, the three-dimensional object having an overhang shape can be repaired easily with high accuracy.

### Advantageous Effects of Invention

According to the three-dimensional deposition device and the method of the present disclosure, it is possible to improve the quality of a three-dimensional object having an overhang shape.

### Brief Description of Drawings

FIG. 1 is a schematic view illustrating a three-dimensional deposition device of the present embodiment.
FIG. 2 is a longitudinal sectional view illustrating an example of a front end of a deposition head.
FIG. 3 is a schematic view illustrating a configuration of a control device.
FIG. 4 is a schematic view for explaining an irradiation angle of a laser beam with respect to a working surface.
FIG. 5 is a schematic view illustrating a method of manufacturing a three-dimensional object having an overhang shape in the related art.
FIG. 6 is a schematic view for explaining an operation of the method of manufacturing a three-dimensional object having an overhang shape in the related art.
FIG. 7 is a schematic view illustrating a method of manufacturing a three-dimensional object having an overhang shape of the present embodiment.
FIG. 8 is a schematic view for explaining an operation of the method of manufacturing a three-dimensional object having an overhang shape of the present embodiment.
FIG. 9 is a schematic view illustrating a step of manufacturing a first formed layer on the working surface.
FIG. 10 is a schematic view illustrating a step of manufacturing a second formed layer on the working surface.
FIG. 11 is a schematic view illustrating a step of manufacturing a third formed layer on the working surface.
FIG. 12 is a schematic view illustrating a step of manufacturing a fourth formed layer on the working surface.
FIG. 13 is a schematic view illustrating another step of manufacturing formed layers on the working surface.
FIG. 14 is a schematic view illustrating a three-dimensional object having an overhang shape.
FIG. 15 is a schematic view illustrating a three-dimensional object needed to be repaired.
FIG. 16 is a schematic view illustrating a step of forming a working surface in a step of repairing the three-dimensional object.
FIG. 17 is a schematic view illustrating the repaired three-dimensional object having an overhang shape.

### Description of Embodiments

Hereinafter, a preferred embodiment of the disclosure will be described in detail with reference to the accompanying drawings. Further, the disclosure is not limited to the embodiment. Then, when there are a plurality of embodiments, a combination of the embodiments may be employed.

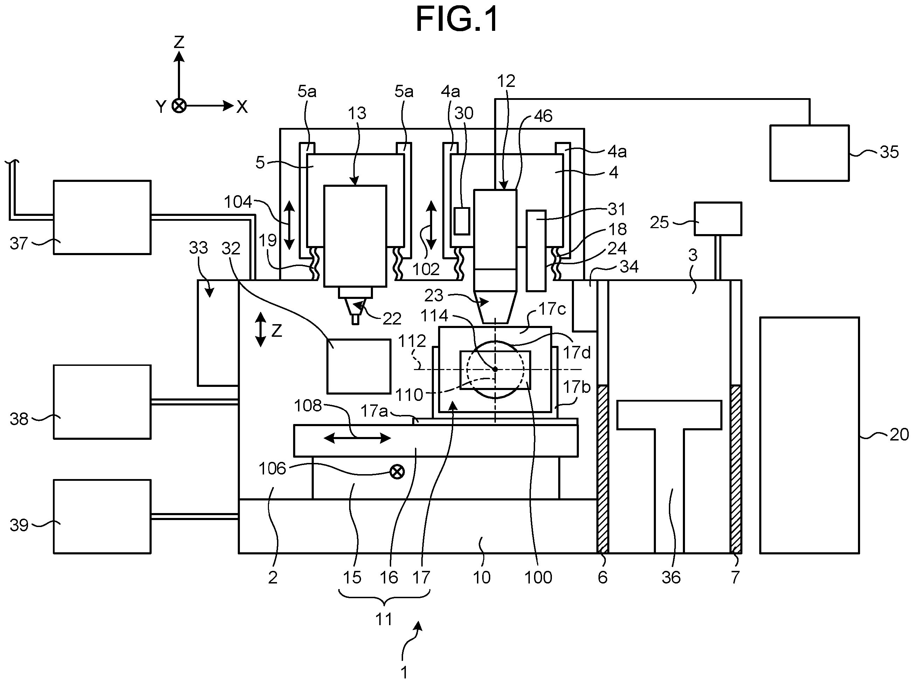

FIG. 1 is a schematic diagram illustrating a three-dimensional deposition device 1 of an embodiment. Here, in the embodiment, one direction within a horizontal plane will be set as an X-axis direction, a direction orthogonal to the X-axis direction within the horizontal plane will be set as a Y-axis direction, and a direction (a vertical direction) orthogonal to each of the X-axis direction and the Y-axis direction will be set as a Z-axis direction.

As illustrated in FIG. 1, a three-dimensional deposition device 1 is a device that manufactures a three-dimensional object on a base unit 100. The base unit 100 is a base member on which the three-dimensional object is formed. The base unit 100 is carried to a predetermined position of the three-dimensional deposition device 1, so that the three-dimensional object is formed on a working surface thereof. The base unit 100 of the embodiment is a plate-shaped member. Further, the base unit 100 is not limited thereto. As the base unit 100, a base member of the three-dimensional object may be used or a member adding the three-dimensional object may be used. A member corresponding to a component or a product, by forming the three-dimensional object at a predetermined position, may be used as the base unit 100.

The three-dimensional deposition device 1 includes a three-dimensional deposition chamber 2, a spare chamber 3, a deposition head accommodation chamber 4, a machining unit accommodation chamber 5, a bed 10, a table unit 11, a deposition head 12, a machining unit 13, a control device 20, a shape measurement unit 30, a heating head 31, a device measurement unit 32, a tool exchange unit 33, a nozzle exchange unit 34, a powder introduction unit 35, a base movement unit 36, an air discharge unit 37, a gas introduction unit 38, and a powder collection unit 39.

The three-dimensional deposition chamber 2 is a casing (a chamber) in which a part other than a designed communication part such as a connection pipe is sealed from the outside. Additionally, the designed communication part is provided with a valve that switches a sealed state and an opened state. If necessary, the three-dimensional deposition chamber 2 can be sealed. The three-dimensional deposition chamber 2 includes therein the bed 10, the table unit 11, the deposition head 12, a part of the machining unit 13, a part of the heating head 31, the device measurement unit 32, the tool exchange unit 33, and the nozzle exchange unit 34.

The spare chamber 3 is provided adjacent to the three-dimensional deposition chamber 2. In the spare chamber 3, a part other than a designed communication part such as a connection pipe is sealed from the outside. The spare chamber 3 is formed as a decompression chamber which connects the outside and the three-dimensional deposition chamber 2 to each other. The base movement unit 36 is provided inside the spare chamber 3. Here, the spare chamber 3 is formed so that, for example, an airtight door 6 is provided at the connection part with the three-dimensional deposition chamber 2. Further, the spare chamber 3 is connected to the outside by an airtight door 7. Further, the spare chamber 3 is provided with an air discharge unit 25 which discharges air from the spare chamber 3. When the door 7 is opened, a necessary member can be carried into the spare chamber 3 from the outside. Further, when the door 6 is opened, a member can be carried between the spare chamber 3 and the three-dimensional deposition chamber 2.

The deposition head accommodation chamber 4 is provided on an upper surface of the three-dimensional deposition chamber 2 in the Z-axis direction. The deposition head accommodation chamber 4 is supported by Z-axis slide units 4a to be movable in the Z-axis direction (direction indicated by an arrow 102) with respect to the three-dimensional deposition chamber 2. A lower surface of the deposition head accommodation chamber 4 in the Z-axis direction is connected to the three-dimensional deposition chamber 2 by a bellows 18. The bellows 18 connects the lower surface of the deposition head accommodation chamber 4 in the Z-axis direction to the three-dimensional deposition chamber 2 so that the lower surface of the deposition head accommodation chamber 4 in the Z-axis direction is formed as a part of the three-dimensional deposition chamber 2. Furthermore, the three-dimensional deposition chamber 2 is formed so that an opening is formed in an area surrounded by the bellows 18. A space surrounded by the lower surface of the deposition head accommodation chamber 4 in the Z-axis direction and the bellows 18 is connected to the three-dimensional deposition chamber 2 and is sealed along with the three-dimensional deposition chamber 2. The deposition head accommodation chamber 4 supports the deposition head 12, the shape measurement unit 30, and the heating head 31. Furthermore, a part including a nozzle 23 of the deposition head 12 and a part including a front end 24 of the heating head 31 protrude toward the three-dimensional deposition chamber 2 from the lower surface of the deposition head accommodation chamber 4 in the Z-axis direction.

When the deposition head accommodation chamber 4 moves in the Z-axis direction by the Z-axis slide units 4a, the deposition head 12, the shape measurement unit 30, and the heating head 31 held therein are moved in the Z-axis direction. Furthermore, the deposition head accommodation chamber 4 is connected to the three-dimensional deposition chamber 2 through the bellows 18, so that the bellows 18 is deformed in accordance with the movement in the Z-axis direction and the sealed state between the three-dimensional deposition chamber 2 and the deposition head accommodation chamber 4 can be maintained.

The machining unit accommodation chamber 5 is provided at the upper face of the three-dimensional deposition chamber 2 in the Z-axis direction. Further, the machining unit accommodation chamber 5 is disposed adjacent to the deposition head accommodation chamber 4. The machining unit accommodation chamber 5 is supported by Z-axis slide units 5a to be movable in the Z-axis direction (a direction of an arrow 104) with respect to the three-dimensional deposition chamber 2. A lower face of the machining unit accommodation chamber 5 in the Z-axis direction is connected to the three-dimensional deposition chamber 2 by a bellows 19. The bellows 19 connects the lower face of the machining unit accommodation chamber 5 in the Z-axis direction to the three-dimensional deposition chamber 2 so that the lower face of the machining unit accommodation chamber 5 in the Z-axis direction is formed as a part of the three-dimensional deposition chamber 2. Further, the three-dimensional deposition chamber 2 is formed so that an opening is formed in an area surrounded by the bellows 19. A space surrounded by the lower face of the machining unit accommodation chamber 5 in the Z-axis direction and the bellows 19 is connected to the three-dimensional deposition chamber 2 and is sealed along with the three-dimensional deposition chamber 2. The machining unit accommodation chamber 5 supports the machining unit 13. Further, the machining unit accommodation chamber 5 is formed so that a part including a tool 22 of the machining unit 13 protrudes toward the three-dimensional deposition chamber 2 from the lower face in the Z-axis direction.

When the machining unit accommodation chamber 5 moves in the Z-axis direction by the Z-axis slide units 5a, the machining unit 13 held therein is moved in the Z-axis direction. Furthermore, the machining unit accommodation chamber 5 is connected to the three-dimensional deposition chamber 2 through the bellows 19, so that the bellows 19 is deformed in accordance with the movement in the Z-axis direction and the sealed state between the three-dimensional deposition chamber 2 and the machining unit accommodation chamber 5 can be maintained.

The bed 10 is provided at a bottom in the three-dimensional deposition chamber 2 in the Z-axis direction. The bed 10 supports the table unit 11. Various wirings, pipes, and driving assemblies are disposed on the bed 10.

The table unit 11 is disposed on an upper face of the bed 10 and supports the base unit 100. The table unit 11 includes a Y-axis slide unit 15, an X-axis slide unit 16, and a rotation table unit 17. The table unit 11 has the base unit 100 attached thereto and moves the base unit 100 on the bed 10.

The Y-axis slide unit 15 moves the X-axis slide unit 16 in the Y-axis direction (a direction of an arrow 106) with respect to the bed 10. The X-axis slide unit 16 is fixed to a member corresponding to a movable part of the Y-axis slide unit 15. The X-axis slide unit 16 moves the rotation table unit 17 in the X-axis direction (a direction of an arrow 108) with respect to the Y-axis slide unit 15. The rotation table unit 17 is fixed to a member corresponding to a movable part of the X-axis slide unit 16 and supports the base unit 100. The rotation table unit 17 is, for example, an inclined circular table and includes a fixing base 17a, a rotation table 17b, an inclination table 17c, and a rotation table 17d. The fixing base 17a is fixed to a member corresponding to a movable part of the X-axis slide unit 16. The rotation table 17b is supported by the fixing base 17a. The rotation table 17b rotates about a rotation shaft 110, which is a rotation axis, and is parallel to the Z-axis direction. The inclination table 17c is supported by the rotation table 17b. The inclination table 17c rotates about a rotation shaft 112, which is an axis, and is orthogonal to a face supporting the rotation table 17b. The rotation table 17d is supported by the inclination table 17c. The rotation table 17d rotates about a rotation shaft 114, which is an axis, and is orthogonal to a surface supporting the inclination table 17c. The rotation table 17d is used to fix the base unit 100.

In this way, the rotation table unit 17 can rotate the base unit 100 about three orthogonal axes by rotating the components thereof about the rotation shafts 110, 112, and 114. The table unit 11 moves the base unit 100 fixed to the rotation table unit 17 in the Y-axis direction and the X-axis direction by the Y-axis slide unit 15 and the X-axis slide unit 16. Further, the table unit 11 rotates the base unit 100 about three orthogonal axes by rotating the components thereof about the rotation shafts 110, 112, and 114 by the rotation table unit 17. The table unit 11 may further move the base unit 100 in the Z-axis direction.

The deposition head 12 injects a powder material toward the base unit 100, irradiates the powder material injected onto the base unit with a laser beam (light beam) to melt the powder, and solidifies the melted powder on the base unit 100 to form a formed layer. The powder which is introduced into the deposition head 12 is powder which is used as a raw material of the three-dimensional object. In the embodiment, for example, a metal material such as iron, copper, aluminum, or titanium can be used as the powder. As the powder, a material such as ceramic other than the metal material may be used. The deposition head 12 is provided at a position facing the upper face of the bed 10 in the Z-axis direction and faces the table unit 11. A lower part of the deposition head 12 in the Z-axis direction is provided with the nozzle 23. The nozzle 23 is attached to a main body 46 of the deposition head 12.

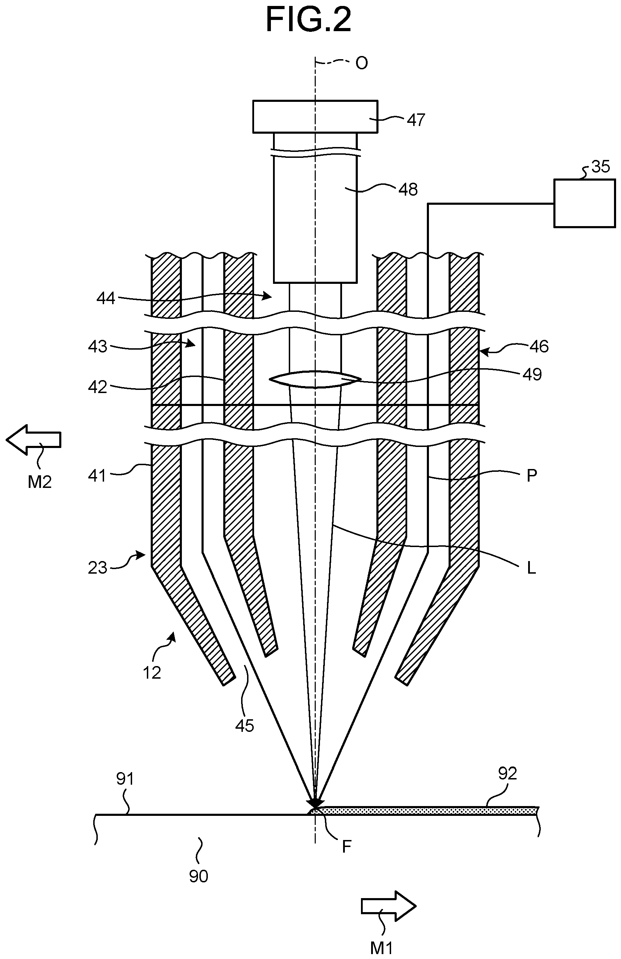

FIG. 2 is a longitudinal sectional view illustrating an example of a front end of the deposition head.

As illustrated in FIG. 2, the nozzle 23 is a double tube including an outer tube 41 and an inner tube 42 inserted into the outer tube 41. The outer tube 41 is a tubular member and is formed so that its diameter decreases toward a front end thereof (downward in the Z-axis direction). The inner tube 42 is inserted into the outer tube 41. The inner tube 42 is also a tubular member and has a shape in which its diameter decreases toward a front end thereof (downward in the Z-axis direction). In the nozzle 23, powder passages 43 through which powder (powder material) P passes are formed between an inner periphery of the outer tube 41 and an outer periphery of the inner tube 42. An inner peripheral face side of the inner tube 42 serves as a laser path 44 through which a laser beam passes. Here, the main body 46 to which the nozzle 23 is attached is a double tube similarly to the nozzle 23, and the powder passages 43 and the laser path 44 are also formed in this way. In the deposition head 12, the powder passages 43 are disposed to surround the periphery of the laser path 44. In the present embodiment, the powder passages 43 serve as powder injection units that inject the powder. In the deposition head 12, powder P introduced from the powder introduction unit 35 flows through the powder passages 43 and is injected from respective nozzle injection openings 45 which are end openings between the outer tube 41 and the inner tube 42.

The deposition head 12 injects the powder P so as to have a predetermined convergence diameter at a predetermined convergence position. The convergence diameter is the diameter of a trajectory of the powder P when the diameter of the trajectory of the injected powder P is minimized. As described above, since the diameter of the nozzle 23 decreases toward the front end thereof, the deposition head 12 injects the powder P so as to converge inward in a radiation direction. That is, the deposition head 12 injects the powder P so that the trajectory of the powder P has a predetermined convergence diameter. Furthermore, the convergence position is a position where the trajectory of the injected powder P converges.

The deposition head 12 is provided with a light source 47, an optical fiber 48, and a light concentrating unit 49. The light source 47 outputs a laser beam. The optical fiber 48 guides a laser output from the light source 47 to the laser path 44. The light concentrating unit 49 is disposed in the laser path 44 and is disposed in an optical path of the laser output from the optical fiber 48. The light concentrating unit 49 concentrates a laser beam L output from the optical fiber 48. The laser beam L which is collected by the light concentrating unit 49 is output from an end of the inner tube 42. In the deposition head 12, the light concentrating unit 49 is disposed in the main body 46, but a part or the entirety of the light concentrating unit 49 may be disposed in the nozzle 23. When a part or the entirety of the light concentrating unit 49 is disposed in the nozzle 23, a focal position can be changed to a different position by the exchange of the nozzle 23.

The deposition head 12 is provided with the laser path 44, through which the laser beam L passes, at the position of a central axis O, and is provided with a plurality of the powder passages 43 outside the laser path 44. The deposition head 12 injects the powder P from the powder passages 43 and outputs the laser beam L from the laser path 44. The powder P injected from the deposition head 12 enters an area irradiated with the laser beam L output from the deposition head 12, and is heated by the laser beam L at a focal point F of the laser beam L. The powder P irradiated with the laser beam L is melted and then reaches the base unit 100. The powder P that has reached the base unit 100 in the melted state is cooled and solidified. Accordingly, a formed layer is formed on the base unit 100.

Here, the deposition head 12 of the present embodiment uses the optical fiber 48 to guide the laser beam L output from the light source 47; however, the present disclosure is not limited to using the optical fiber 48 and may use another transmission member. Furthermore, the light concentrating unit 49 may be provided in one of or both the main body 46 and the nozzle 23. Since the deposition head 12 of the present embodiment can be processed effectively, the powder passages 43 injecting the powder P and the laser path 44 emitting the laser beam L are provided coaxially; however, the present disclosure is not limited thereto. The deposition head 12 may be formed so that an assembly for injecting the powder P and an assembly for emitting the laser beam L are provided as separate members. The deposition head 12 of the present embodiment irradiates the powder material with the laser beam, but may emit a light beam other than the laser beam as long as the powder material can be melted or sintered.

As illustrated in FIG. 1, the machining unit 13 is used to machine, for example, a formed layer or the like. The machining unit 13 is provided at a position facing the upper face of the bed 10 in the Z-axis direction and faces the table unit 11. The tool 22 is attached to a lower portion of the machining unit 13 in the Z-axis direction. Additionally, the machining unit 13 may be provided in a movable range of the base unit 100 using the table unit 11 above the bed 10 in the Z-axis direction. Here, the arrangement position is not limited to the position of the embodiment.

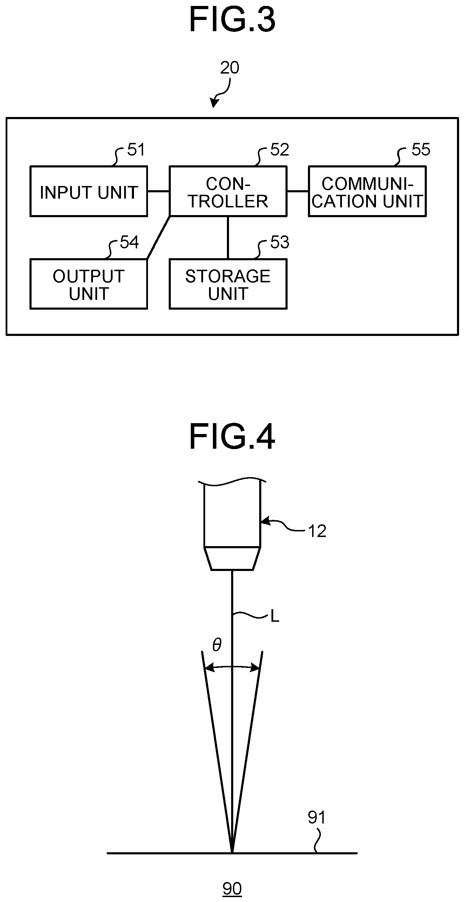

FIG. 3 is a schematic diagram illustrating a configuration of the control device 20.

As illustrated in FIG. 1, the control device 20 is electrically connected to the driving units of the components (the aforementioned bed 10, table unit 11, deposition head 12, machining unit 13, shape measurement unit 30, heating head 31, device measurement unit 32, tool exchange unit 33, nozzle exchange unit 34, powder introduction unit 35, base movement unit 36, air discharge unit 37, gas introduction unit 38, powder collection unit 39, and the like) of the three-dimensional deposition device 1, and controls the operations of the components of the three-dimensional deposition device 1. The control device 20 is installed at the outside of the three-dimensional deposition chamber 2 or the spare chamber 3. As illustrated in FIG. 3, the control device 20 includes an input unit 51, a controller 52, a storage unit 53, an output unit 54, and a communication unit 55. The input unit 51, the controller 52, the storage unit 53, the output unit 54, and the communication unit 55 are electrically connected to one another.

The input unit 51 is, for example, an operation panel. An operator inputs information or an instruction to the input unit 51. The controller 52 includes, for example, a CPU (Central Processing Unit) and a memory. The controller 52 outputs an instruction for controlling the operations of the components of the three-dimensional deposition device 1 to the components of the three-dimensional deposition device 1. Further, information and the like are input to the controller 52 from the components of the three-dimensional deposition device 1. The storage unit 53 is, for example, a storage device such as a RAM (Random Access Memory) or a ROM (Read Only Memory). The storage unit 53 stores an operation program for the three-dimensional deposition device 1 controlling the operations of the components by the controller 52 executing the program, information of the three-dimensional deposition device 1, design information of the three-dimensional object, and the like. The output unit 54 is, for example, a display. The output unit 54 displays, for example, information of the components of the three-dimensional deposition device 1. The communication unit 55 exchanges information with, for example, a communication line such as the Internet or a LAN (Local Area Network) by communicating with the communication line. Additionally, the control device 20 may include at least the controller 52 and the storage unit 53. The control device 20 may output an instruction to the components of the three-dimensional deposition device 1 if the controller 52 and the storage unit 53 are provided.

A three-dimensional deposition method by the three-dimensional deposition device 1 of the present embodiment is a method of manufacturing a three-dimensional object 93 that overhangs on one side in a horizontal direction by depositing a formed layer on a working surface 91 of an object 90 to be processed. The three-dimensional deposition method of the present embodiment includes: a step of supplying the powder P toward the working surface 91 of the object 90 to be processed; a step of irradiating the powder P with the laser beam L and sintering or melting and solidifying at least a part of the powder P irradiated with the laser beam L to form formed layers 151, 152, 153, and 154; and a step of allowing an irradiation angle θ of the laser beam L on an overhanging side with respect to the working surface 91 when the formed layers 151, 152, 153, and 154 are formed to be less than 90° in a range in which the formed layers 151, 152, 153, and 154 can be formed.

Hereinafter, a method of manufacturing a general three-dimensional object by the three-dimensional deposition device 1 of the present embodiment will be described.

In the method of manufacturing a three-dimensional object by the three-dimensional deposition device 1, as illustrated in FIG. 1 and FIG. 2, the present embodiment will be described using a case of manufacturing a three-dimensional object on the working surface 91 of the object 90 to be processed. The object 90 to be processed is, for example, a metallic plate-shaped member, but the shape and material thereof may be arbitrarily set as long as a three-dimensional object is manufactured thereon. The object 90 to be processed is mounted on the base unit 100.

The control device 20 moves the base unit 100 so that the object 90 to be processed on the base unit 100 is disposed below the deposition head 12 in the Z-axis direction by the table unit 11. The control device 20 introduces the powder from the powder introduction unit 35 into the deposition head 12 and emits the laser beam L while injecting the powder P from the deposition head 12 along with the gas. The powder P has a predetermined convergence diameter and is injected toward the object 90 to be processed on the base unit 100. The laser beam L is emitted to the powder P with a predetermined spot diameter between the deposition head 12 and the object 90 to be processed. Here, the position of the spot diameter of the laser beam L in the Z-axis direction with respect to the position of the convergence diameter of the powder P in the Z-axis direction, and the spot diameter at the position of the convergence diameter of the powder Pin the Z-axis direction can be controlled by, for example, the movement of the position of the light concentrating unit 49.

That is, the deposition head 12 introduces the powder P to the powder passages 43, injects the powder P from the nozzle injection openings 45, and outputs the laser beam L from the laser path 44. The focal point F of the laser beam L from the laser path 44 is set near the working surface 91 of the object 90 to be processed, and the powder P from the nozzle injection openings 45 is injected toward the focal point of the laser beam L. Therefore, the powder P injected from the deposition head 12 is heated by the laser beam L at the focal point F of the laser beam L on the working surface 91 of the object 90 to be processed. The powder P irradiated with the laser beam L is melted in the vicinity of the working surface 91 of the object 90 to be processed, and then reaches the working surface 91 of the object 90 to be processed. The powder P that has reached the working surface 91 of the object 90 to be processed in the melted state is cooled and solidified. Accordingly, a formed layer 92 is formed on the working surface 91 of the object 90 to be processed.

The control device 20 irradiates the working surface 91 of the object 90 to be processed with the laser beam L from the deposition head 12 and injects the powder P while moving the object 90 to be processed in a predetermined movement direction M1 by the table unit 11. Therefore, the formed layer 92 that is continuous to the working surface 91 of the object 90 is formed. In such a case, the processing direction by the three-dimensional deposition device is M2. The three-dimensional deposition device 1 repeats the formation of such a formed layer 92, thereby manufacturing a three-dimensional object in which a plurality of formed layers are integrally deposited.

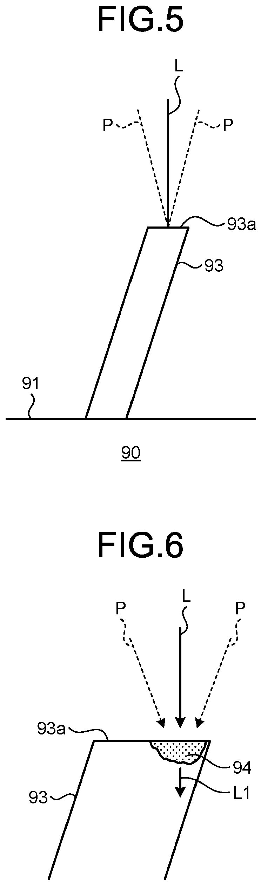

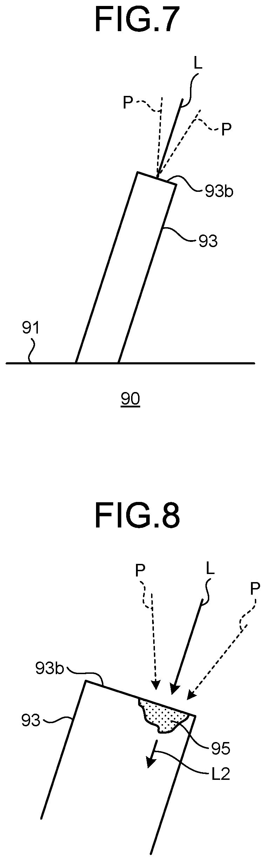

Hereinafter, a method of manufacturing a three-dimensional object having an overhang shape will be described in detail. FIG. 4 is a schematic view for explaining the irradiation angle of the laser beam with respect to a working surface. FIG. 5 is a schematic view illustrating a method of manufacturing a three-dimensional object having an overhang shape in the related art. FIG. 6 is a schematic view for explaining an operation of the method of manufacturing a three-dimensional object having an overhang shape in the related art. FIG. 7 is a schematic view illustrating a method of manufacturing a three-dimensional object having an overhang shape of the present embodiment. FIG. 8 is a schematic view for explaining an operation of the method of manufacturing a three-dimensional object having an overhang shape of the present embodiment.

As illustrated in FIG. 2 and FIG. 4, the deposition head 12 is provided with the laser path 44 that emits the laser beam L to the central axis O, and is provided with, around the laser path 44, the powder passages 43 that inject the powder P. The deposition head 12 irradiates the working surface 91 of the object 90 to be processed with the laser beam L from the laser path 44. At this time, in order to form the formed layer 92 having a proper shape on the working surface 91, it is preferable that the irradiation angle θ of the laser beam L with respect to the working surface 91 of the object 90 to be processed be close to 90°, and the range of the irradiation angle θ, in which the formed layer 92 can be formed, is preset. The irradiation angle θ, at which the formed layer 92 can be formed, varies depending on the output of the laser beam L, but is preferably in the range of 80° to 100°, for example.

As illustrated in FIG. 5, when the three-dimensional object 93, which is inclined to be displaced by a predetermined amount in the horizontal direction, that is, overhangs on one side, is manufactured by depositing a formed layer on the working surface 91 of the object 90 to be processed, the irradiation angle θ of the laser beam L with respect to the working surface 91 is generally set to a proper irradiation angle θ, that is, 90°. That is, the working surface 91 is irradiated with the laser beam L at the irradiation angle θ of 90°, and the powder P is injected. In such a case, as illustrated in FIG. 6, the three-dimensional object 93 is formed by depositing a plurality of formed layers on the working surface 91 in a horizontal state, and a surface 93a of this formed layer is a horizontal plane parallel to the working surface 91. When the powder P is injected to the surface 93a of the three-dimensional object 93 and the laser beam L is emitted thereto, the surface 93a is melted to form a molten pool 94. At this time, since the surface 93a is irradiated with the laser beam L at the irradiation angle θ of 90° with respect to the working surface 91, heat L1 input to the three-dimensional object 93 is along the vertical direction. Therefore, an end surface of the three-dimensional object 93 on the overhanging side is intensively heated and the molten pool 94 melts down, which makes it difficult to manufacture the three-dimensional object 93 having a desired overhang shape.

In this regard, in the three-dimensional deposition method of the present embodiment, as illustrated in FIG. 7, when a three-dimensional object having an overhang shape is formed by depositing a formed layer on the working surface 91 of the object 90 to be processed, the irradiation angle θ of the laser beam L on an overhanging side with respect to the working surface 91 is set to be less than 90° in a range in which formed layers can be formed, and the powder P is injected and the laser beam L is emitted in this state.

When the three-dimensional object 93, which is inclined to be displaced by a predetermined amount in the horizontal direction, that is, overhangs on one side, is manufactured each time a formed layer is deposited on the working surface 91 of the object 90 to be processed, the irradiation angle θ of the laser beam L with respect to the working surface 91 is set to be less than 90° in the present embodiment. That is, the working surface 91 is irradiated with the laser beam L at the irradiation angle θ of less than 90° and the powder P is injected. In such a case, as illustrated in FIG. 8, the three-dimensional object 93 is formed by diagonally depositing a plurality of formed layers on the working surface 91 in the horizontal state, and a surface 93b on the formed layers is an inclined surface with respect to the working surface 91. When the powder P is injected to the surface 93b of the three-dimensional object 93 and the laser beam L is emitted thereto, the surface 93b is melted to form a molten pool 95. At this time, since the surface 93b is irradiated with the laser beam L at the irradiation angle θ inclined with respect to the working surface 91, heat L2 input to the three-dimensional object 93 follows an overhang shape of the three-dimensional object 93. Therefore, an end surface of the three-dimensional object 93 on the overhanging side is not intensively heated and the molten pool 95 is maintained without melting down, which makes it possible to manufacture the three-dimensional object 93 having a desired overhang shape.

As illustrated in FIG. 1 to FIG. 3, the three-dimensional deposition device 1 of the present embodiment includes an irradiation angle changing unit that changes the irradiation angle θ of the laser beam L emitted from the laser path 44 to the working surface 91, and the controller 52 that controls the irradiation angle changing unit so that the irradiation angle θ on an overhanging side with respect to the working surface 91 is less than 90° in a range in which formed layers can be formed. In the present embodiment, the irradiation angle changing unit is the rotation table unit 17, and the rotation table unit 17 can change the angle of the base unit 100 by rotating each component around the rotation shafts 112 and 114, which are axes. Therefore, by fixing the object 90 to be processed to the base unit 100 and changing the relative angle between the working surface 91 of the object 90 to be processed and the deposition head 12, it is possible to change the irradiation angle θ of the laser beam L from the laser path 44 to the working surface 91. Additionally, a configuration may be employed in which the irradiation angle θ of the laser beam L from the laser path 44 to the working surface 91 may be changed by changing the angle of the deposition head 12 with respect the working surface 91 of the object 90 to be processed.

Furthermore, the controller 52 controls the angle of the rotation table unit 17 so that the irradiation angle θ on the overhanging side with respect to the working surface 91 is gradually reduced when another formed layer is deposited on a surface of the formed layer. At this time, the controller 52 controls the angle of the rotation table unit 17 so that the irradiation angle θ with respect to the surface of the formed layer is 90°. Furthermore, the controller 52 controls the injection amount of the powder P, the output of the laser beam L, a processing speed, and the like so that the thickness of the formed layer on the overhanging side is thinner than that of the formed layer on the non-overhanging side.

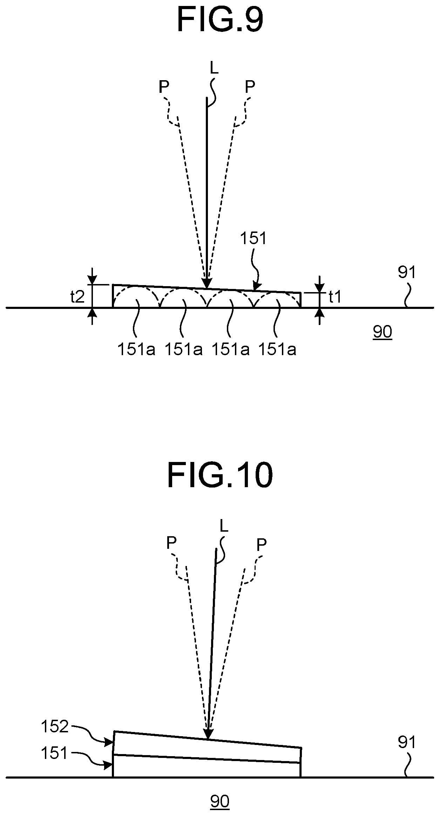

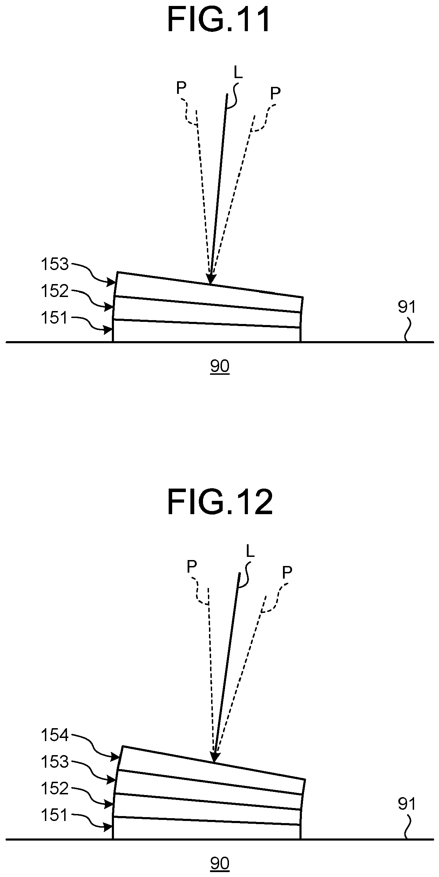

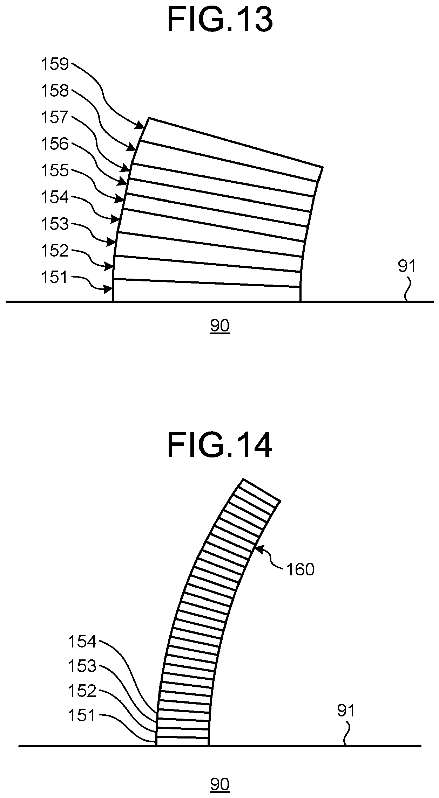

Hereinafter, a method of manufacturing a three-dimensional object having an overhang shape by the three-dimensional deposition device 1 of the present embodiment will be described in detail. FIG. 9 is a schematic view illustrating a step of manufacturing a first formed layer on the working surface. FIG. 10 is a schematic view illustrating a step of manufacturing a second formed layer on the working surface. FIG. 11 is a schematic view illustrating a step of manufacturing a third formed layer on the working surface. FIG. 12 is a schematic view illustrating a step of manufacturing a fourth formed layer on the working surface. FIG. 13 is a schematic view illustrating another step of manufacturing formed layers on the working surface. FIG. 14 is a schematic view illustrating a three-dimensional object having an overhang shape.

The present embodiment will be described using a case where the object 90 to be processed is a metal plate-shaped member and the working surface 91 is a horizontal and flat surface; however, the shape and material may be arbitrarily set as long as a three-dimensional object is manufactured thereon. For example, a shaft-shaped member having a columnar shape (or a cylindrical shape) or the like may be used. Furthermore, a three-dimensional object formed on the working surface 91 of the object 90 to be processed has an overhang shape. The three-dimensional object having an overhang shape is, for example, a member having a wing shape, which is curved or bent in a direction orthogonal to a deposition direction and overhangs.

As illustrated in FIG. 2 and FIG. 9, first, the irradiation angle θ of the laser beam L is set to 90° (angle at which a formed layer can be formed) with respect to the working surface 91 of the object 90 to be processed. In such a state, the powder P introduced to the powder passages 43 is injected from the nozzle injection openings 45, the laser beam L is output from the laser path 44, and the object 90 to be processed is moved with respect to the deposition head 12. By so doing, the powder P injected from the deposition head 12 is heated by the laser beam L and melted, and then reaches the working surface 91 of the object 90 to be processed. The powder P that has reached the working surface 91 of the object 90 to be processed in the melted state is cooled and solidified, so that the first formed layer 151 is formed on the working surface 91 of the object 90 to be processed.

At this time, the movement direction of the object 90 to be processed, that is, the processing direction by the deposition head 12 is a direction orthogonal to the paper surface of FIG. 9, and the first formed layer 151 is composed of a plurality of beads 151a in the left-right direction of FIG. 9. Furthermore, in the first formed layer 151, a thickness t1 of the overhanging side (right side in FIG. 9) is thinner than a thickness t2 of the non-overhanging side (left side in FIG. 9). The thickness of the first formed layer 151 can be changed by changing the injection amount of the powder P injected from the nozzle injection openings 45, changing the output of the laser beam L emitted from the laser path 44, or changing the movement speed (processing speed by the deposition head 12) of the object 90 to be processed.

After the first formed layer 151 is formed on the working surface 91 of the object 90 to be processed, as illustrated in FIG. 2 and FIG. 10, next, the irradiation angle θ of the laser beam L is set to be less than 90° with respect to the working surface 91 of the object 90 to be processed. At this time, the irradiation angle θ with respect to the surface of the first formed layer 151 is set to 90°. That is, the deposition head 12 is inclined toward the overhanging side (right side in FIG. 10) with respect to the working surface 91 of the object 90 to be processed. In such a state, the powder P introduced to the powder passages 43 is injected from the nozzle injection openings 45, the laser beam L is output from the laser path 44, and the object 90 to be processed is moved with respect to the deposition head 12. By so doing, the powder P injected from the deposition head 12 is heated by the laser beam L and melted, and then reaches the surface of the first formed layer 151. The powder P that has reached the surface of the first formed layer 151 in the melted state is cooled and solidified, so that the second formed layer 152 is formed on the surface of the first formed layer 151. Additionally, the processing direction by the deposition head 12 and the arrangement direction of the beads are the same as those of the first formed layer 151. Furthermore, as in the first formed layer 151, also in the second formed layer 152, the thickness of the overhanging side (right side in FIG. 10) is thinner than that of the non-overhanging side (left side in FIG. 10).

After the second formed layer 152 is formed on the surface of the first formed layer 151, as illustrated in FIG. 2 and FIG. 11, subsequently, the irradiation angle θ of the laser beam L is set to be reduced by a predetermined angle with respect to the working surface 91 of the object 90 to be processed. At this time, the irradiation angle θ with respect to the surface of the second formed layer 152 is set to 90°. That is, the deposition head 12 is further inclined toward the overhanging side (right side in FIG. 11) with respect to the working surface 91 of the object 90 to be processed. In such a state, the powder P introduced to the powder passages 43 is injected from the nozzle injection openings 45, the laser beam L is output from the laser path 44, and the object 90 to be processed is moved with respect to the deposition head 12. By so doing, the third formed layer 153 is formed on the surface of the second formed layer 152 in the same manner as described above.

After the third formed layer 153 is formed on the surface of the second formed layer 152, as illustrated in FIG. 2 and FIG. 12, subsequently, the irradiation angle θ of the laser beam L is set to be further reduced by a predetermined angle with respect to the working surface 91 of the object 90 to be processed. At this time, the irradiation angle θ with respect to the surface of the third formed layer 153 is set to 90°. That is, the deposition head 12 is further inclined toward the overhanging side (right side in FIG. 11) with respect to the working surface 91 of the object 90 to be processed. In such a state, the powder P introduced to the powder passages 43 is injected from the nozzle injection openings 45, the laser beam L is output from the laser path 44, and the object 90 to be processed is moved with respect to the deposition head 12. By so doing, the fourth formed layer 154 is formed on the surface of the third formed layer 153 in the same manner as described above.

Additionally, in the above, each time the formed layers 151, 152, 153, and 154 are deposited on the working surface 91 of the object 90 to be processed, the deposition head 12 is continuously inclined and the irradiation angle θ on the overhanging side with respect to the working surface 91 is continuously changed by a predetermined angle; however, the present disclosure is not limited to such a method. For example, as illustrated in FIG. 13, after the formed layers 151, 152, 153, and 154 are deposited on the working surface 91 of the object 90 to be processed, one or a plurality of formed layers 155, 156, and 157 may be deposited on the surface of the fourth formed layer 154 maintaining the irradiation angle of the deposition head 12 and without changing the irradiation angle θ on the overhanging side with respect to the working surface 91. And then the deposition head 12 may be continuously inclined, and the irradiation angle θ on the overhanging side with respect to the working surface 91 may be continuously changed by a predetermined angle, so that one or a plurality of formed layers 158 and 159 may be deposited.

By continuing such three-dimensional deposition work, a three-dimensional object 160 having an overhang shape in which the formed layers 151, 152, 153, 154 ... are deposited is manufactured as illustrated in FIG. 14. The three-dimensional object 160 is curved in a direction orthogonal to the deposition direction (vertical direction) with respect to the working surface 91 of the object 90 to be processed and overhangs.

Furthermore, in the above description, the three-dimensional object 160 having an overhang shape is newly manufactured by depositing the formed layers 151, 152, 153, 154 ... on the working surface 91 of the object 90 to be processed; however, the present embodiment can be applied to repair work of a three-dimensional object having an overhang shape which has been already manufactured by a three-dimensional deposition method or other manufacturing methods (casting, forging, cutting, and the like).

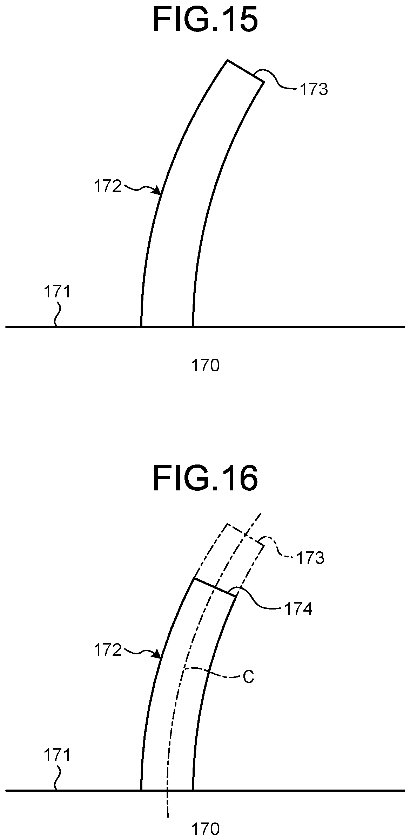

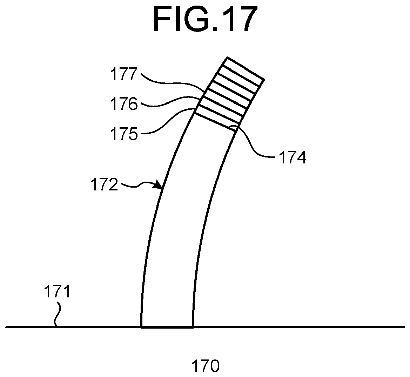

FIG. 15 is a schematic view illustrating a three-dimensional object needed to be repaired, FIG. 16 is a schematic view illustrating a step of forming a working surface in a step of repairing the three-dimensional object, and FIG. 17 is a schematic view illustrating the repaired three-dimensional object having an overhang shape.

As illustrated in FIG. 15, for example, there is a structure in which a wing 172 as a three-dimensional object having an overhang shape is fixed to an outer peripheral surface 171 of a shaft 170. The wing 172 needs to be repaired because its front end 173 is being worn. In such a case, as illustrated in FIG. 16, a front end side of the wing 172 having an overhang shape is cut at a cutting surface 174 in a direction orthogonal to an overhanging direction C, thereby removing the front end 173. Then, as illustrated in FIG. 17, the irradiation angle θ of the laser beam L on an overhanging side (right side in FIG. 17) with respect to the cutting surface 174 of the wing 172 is set to be less than 90° in a range in which formed layers can be formed, so that formed layers 175, 176, 177 ... are formed. That is, the formed layers 175, 176, 177 ... are formed in the same method as the three-dimensional deposition method by which the formed layers 151, 152, 153, and 154 illustrated in FIG. 12 are formed.

As described above, the three-dimensional deposition device of the present embodiment includes: the powder passages 43 and the nozzle injection openings 45 that supply the powder P toward the working surface 91 of the object 90 to be processed; the laser path 44 that irradiates the powder P with the laser beam L to sinter or melt and solidify at least a part of the powder P irradiated with the laser beam L so as to form the formed layers 151, 152, 153, and 154; the rotation table unit 17 serving as the irradiation angle changing unit that changes the irradiation angle θ of the laser beam L from the laser path 44 to the working surface 91; and the controller 52 that controls the rotation table unit 17 so that the irradiation angle θ on the overhanging side with respect to the working surface 91 is less than 90° in a range in which the formed layers 151, 152, 153, and 154 can be formed.

Therefore, when the surface of the first formed layer 151 on the lower side is irradiated with the laser beam L and the powder P is supplied, since the first formed layer 151 on the lower side is irradiated with the laser beam L along the overhang shape, a melted part is properly formed on the surface of the first formed layer 151 on the lower side, so that the second formed layer 152 on the upper side can be properly deposited on the first formed layer 151 on the lower side. As a consequence, it is possible to improve the quality of the three-dimensional object 160 having an overhang shape.

In the three-dimensional deposition device of the present embodiment, the controller 52 controls the rotation table unit 17 so that the irradiation angle θ on the overhanging side with respect to the working surface 91 is gradually reduced when the second formed layer 152 is deposited on the surface of the first formed layer 151. Therefore, the formed layers 151, 152, 153, and 154 deposited on the working surface 91 can be efficiently formed in an overhang shape.

In the three-dimensional deposition device of the present embodiment, the controller 52 controls the rotation table unit 17 so that the irradiation angle θ with respect to the surfaces of the formed layers 151, 152, 153, and 154 is 90°. Therefore, it is possible to properly deposit the second formed layer 152 on the surface of the first formed layer 151, thereby improving the quality of the three-dimensional object 160 having an overhang shape.

In the three-dimensional deposition device of the present embodiment, the controller 52 controls the rotation table unit 17 so that the thickness t1 of each of the formed layers 151, 152, 153, and 154 on the overhanging side is thinner than the thickness t2 of each of the formed layers 151, 152, 153, and 154 on the non-overhanging side. Therefore, the formed layers 151, 152, 153, and 154 can be efficiently formed in an overhang shape.

In the three-dimensional deposition device of the present embodiment, the laser path 44 is provided at the center of the deposition head 12, the powder passages 43 and the nozzle injection openings 45 are provided around the laser path 44 in the deposition head 12, and the injection angle of the powder P is also changed when the irradiation angle θ of the laser beam L is changed. Therefore, it is possible to always maintain the injection position of the powder P at a proper position with respect to the irradiation position of the laser beam L, thereby improving the quality of the three-dimensional object 160 having an overhang shape.

Furthermore, in the three-dimensional deposition method of the present embodiment includes: a step of supplying the powder P toward the working surface 91 of the object 90 to be processed; a step of irradiating the powder P with the laser beam L and sintering or melting and solidifying at least a part of the powder P irradiated with the laser beam L to form the formed layers 151, 152, 153, and 154; and a step of allowing the irradiation angle θ of the laser beam L on the overhanging side with respect to the working surface 91 when the formed layers 151, 152, 153, and 154 are formed to be less than 90° in a range in which the formed layers 151, 152, 153, and 154 can be formed.

Therefore, when the surface of the first formed layer 151 on the lower side is irradiated with the laser beam L and the powder P is supplied, since the first formed layer 151 on the lower side is irradiated with the laser beam L along the overhang shape, a melted part is properly formed on the surface of the first formed layer 151 on the lower side, so that the second formed layer 152 on the upper side can be properly deposited on the first formed layer 151 on the lower side. As a consequence, it is possible to improve the quality of the three-dimensional object 160 having an overhang shape.

In the three-dimensional deposition method of the present embodiment, when the second formed layer 152 is deposited on the surface of the first formed layer 151, the irradiation angle θ on the overhanging side with respect to the working surface 91 is gradually reduced. Therefore, the formed layers 151, 152, 153, and 154 deposited on the working surface 91 can be efficiently formed in an overhang shape.

In the three-dimensional deposition method of the present embodiment, the front end 173 of the wing 172 as a three-dimensional object having an overhang shape is cut at the cutting surface 174 in the direction orthogonal to the overhanging direction C, and the irradiation angle θ of the laser beam L on the overhanging side with respect to cutting surface 174 is set to be less than 90° in a range in which the formed layers 175, 176, and 177 can be formed, so that the formed layers 175, 176, and 177 are formed. Therefore, it is easy to repair the wing 172 as a three-dimensional object having an overhang shape with high accuracy.

Additionally, in the aforementioned embodiment, the powder material injected by the powder supply unit is a metallic powder material; however, a non-metallic powder material such as a resin powder material may be used. Furthermore, the laser beam is used as a light beam; however, an electron beam or the like may be used.

### Reference Signs List

1 three-dimensional deposition device
2 three-dimensional deposition chamber
3 spare chamber
4 deposition head accommodation chamber
4a, 5a Z-axis slide unit
5 machining unit accommodation chamber
6, 7 door
10 bed
11 table unit
12 deposition head
13 machining unit
15 Y-axis slide unit
16 X-axis slide unit
17 rotation table unit (irradiation angle changing unit)
17a fixing base
17b rotation table
17c inclination table
17d rotation table
18, 19 bellows
20 control device
22 tool
23 nozzle
24 front end
25 air discharge unit
30 shape measurement unit
31 heating head
32 device measurement unit
33 tool exchange unit
34 nozzle exchange unit
35 powder introduction unit
36 base movement unit
37 air discharge unit
38 gas introduction unit
39 powder collection unit
41 outer tube
42 inner tube
43 powder passage (powder supply unit)
44 laser path (light irradiation unit)
45 nozzle injection opening (powder supply unit)
46 main body
47 light source
48 optical fiber
49 light concentrating unit
51 input unit
52 controller
53 storage unit
54 output unit
55 communication unit
90 object to be processed
91 working surface
92 formed layer
93 three-dimensional object
93a, 93b surface
94, 95 molten pool
100 base unit
102, 104, 106, 108 arrow
110 rotation shaft
151 first formed layer
151a bead
152 second formed layer
153 third formed layer
154 fourth formed layer
155, 156, 157, 158, 159 formed layer
160 three-dimensional object
170 shaft
171 outer peripheral surface
172 wing
173 front end
174 cutting surface
175, 176, 177 formed layer
C overhanging direction
F focal point
M1 movement direction
M2 processing direction
L laser beam (light beam)
O central axis
P powder
t1, t2 thickness

## Claims

1. A three-dimensional deposition device that forms a three-dimensional object having an overhang shape by depositing a formed layer on an object to be processed, the three-dimensional deposition device comprising:
a powder supply unit that supplies a powder material toward a working surface of the object to be processed;
a light irradiation unit that irradiates the powder material with a light beam to sinter or melt and solidify at least a part of the powder material irradiated with the light beam so as to form the formed layer;
an irradiation angle changing unit that changes an irradiation angle of the light beam emitted from the light irradiation unit to the working surface; and
a controller that controls the irradiation angle changing unit so that the irradiation angle on an overhanging side with respect to the working surface is less than 90° in a range in which the formed layer is formable.

2. The three-dimensional deposition device according to claim 1, wherein the controller controls the irradiation angle changing unit so that the irradiation angle on the overhanging side with respect to the working surface is gradually reduced when the formed layer is deposited on a surface of the formed layer.

3. The three-dimensional deposition device according to claim 1 or 2, wherein the controller controls the irradiation angle changing unit so that the irradiation angle with respect to the surface of the formed layer is 90°.

4. The three-dimensional deposition device according to any one of claims 1 to 3, wherein the controller controls the powder supply unit and the light irradiation unit so that a thickness of the formed layer on the overhanging side is thinner than a thickness of the formed layer on a non-overhanging side.

5. The three-dimensional deposition device according to any one of claims 1 to 4, wherein the light irradiation unit is provided at a center of a deposition head, the powder supply unit is provided around the light irradiation unit in the deposition head, and the irradiation angle changing unit also changes an injection angle at which the powder supply unit performs injection toward the working surface, when changing the irradiation angle.

6. A three-dimensional deposition method that forms a three-dimensional object having an overhang shape by depositing a formed layer on an object to be processed, the three-dimensional deposition method comprising:
a step of supplying a powder material toward a working surface of the object to be processed;
a step of irradiating the powder material with a light beam and sintering or melting and solidifying at least a part of the powder material irradiated with the light beam to form the formed layer; and
a step of allowing an irradiation angle of the light beam on an overhanging side with respect to the working surface when the formed layer is formed to be less than 90° in a range in which the formed layer is formable.

7. The three-dimensional deposition method according to claim 6, wherein, when the formed layer is deposited on a surface of the formed layer, the irradiation angle on the overhanging side with respect to the working surface is gradually reduced.

8. The three-dimensional deposition method according to claim 6 or 7, wherein a front end of the three-dimensional object having an overhang shape is cut at a cutting surface in a direction orthogonal to an overhanging direction, and the irradiation angle of the light beam on the overhanging side with respect to the cutting surface is set to be less than 90° in a range in which the formed layer is formable.
